# EUROPEAN PATENT APPLICATION

(11) **EP 0 588 233 A1**
(43) Date of publication of application: **23.03.1994**
(21) Application number: 93114479.4
(22) Date of filing: 09.09.1993
(51) Int. Cl.: B60R 22/26

(54) **A system for constraining passenger safety belts to the seat supporting guides**

(30) Priority: 17.09.1992 IT TO920769
(71) Applicant: ELCAT S.p.A., I-10098 Rivoli (Torino) (IT)
(72) Inventor: Brandoli, Luigi, I-10098 Rivoli (Torino) (IT)
(74) Representative: Lotti, Giorgio

(57) **Abstract**

A system for constraining passenger safety belts to the vehicle seat supporting guides of the type comprising a pair of fixed guides (10), rigid with the vehicle floor, and a pair of mobile guides (20) rigid with the seat and slidable along the fixed guides.
The system comprises a plate (40), securely attachable to the safety belt and fixed to at least one of the mobile guides (20). The plate (40) is provided with first locking means (46,47) facing corresponding second locking means (50) fitted with locking seats (54) and rigid with at least one of the fixed guides (10).
The system is capable of assuming two opposite arrangements: the first arrangement, for normal operating conditions, in which the first locking means are spaced apart from the locking seats (54); the second arrangement, in case of collisions, in which the plate (40) engages its locking means (46,47) with the locking seats (54) of the second locking means (50).

## Description

The present invention pertains to the field of vehicle safety belts for passengers, and more particularly refers to a system for constraining passenger safety belts to the seat supporting guides.

Safety belts have to satisfy reliability and strength requirements in case of violent crashes occurring. It is necessary that safety belts, besides having a high tensile strength themselves, should be securely anchored to the vehicle not to become loose in case of accidents.

According to known devices, in case of an accident occurring, a weak point of the connection of safety belts to the vehicle is the one located on the side of the seat where a flexible bracket carrying the buckle fastening device is fixed to a tongue of a bar having a U-shaped cross section. The other tongue of the bar is in turn securely welded to one of the mobile guides of the seat. This arrangement allows the bracket to follow the seat so that the passenger always finds the fastening device by his side however the position of the seat is adjusted.

A drawback that occurs with this kind of system is that, with a violent crash occurring, the bracket pulls the tongue of the U-shaped bar to which it is attached and can tear it off mobile guide. In these conditions the passenger is no longer held on the seat and is likely to be injured.

It is an object of this invention to provide a system for anchoring safety belts to the seat supporting guides that can prevent the above identified drawback from occurring.

It is another object of this invention to provide a safety belt anchoring system capable of stopping either vertical or horizontal movements of the connection of the belt to the seat guides.

It is a further object of the invention to provide a system capable of restraining the seat mobile guides to the fixed guides in case of a collision, preventing the seat from sliding, if conventional locking and unlocking means should break because of the crash.

These and further objects and advantages, which will be more apparent hereinafter are attained according to the invention by a system for constraining passenger safety belts to the vehicle seat supporting guides of the type comprising a pair of fixed guides, rigid with the vehicle floor, and a pair of mobile guides rigid with the seat and slidable along the fixed guides, characterised in that it comprises constraining means, securely attachable to the safety belt and fixed to at least one of said mobile guides; said means being provided with first locking means facing corresponding second locking means fitted with locking seats and rigid with at least one of said fixed guides; the system being capable of assuming two opposite arrangements: the first arrangement, for normal operating conditions, in which said first locking means are spaced apart from said locking seats; the second arrangement, in case of collisions, in which the constraining means have said first locking means engaged within said locking seats of said second locking means.

A preferred but not-limiting embodiment of the system according to the invention is described hereinafter with reference to the accompanying drawings, in which:
- Figure 1: is a transverse sectional view of a pair of supporting and sliding guides for a vehicle seat which are provided with a constraint system according to this invention;
- Figure 2: is a side view of one of the components of the system of Fig. 1;
- Figure 3: is a top view of the component of Fig. 2; and
- Figure 4: is a side view of another component of the system of Fig. 1.

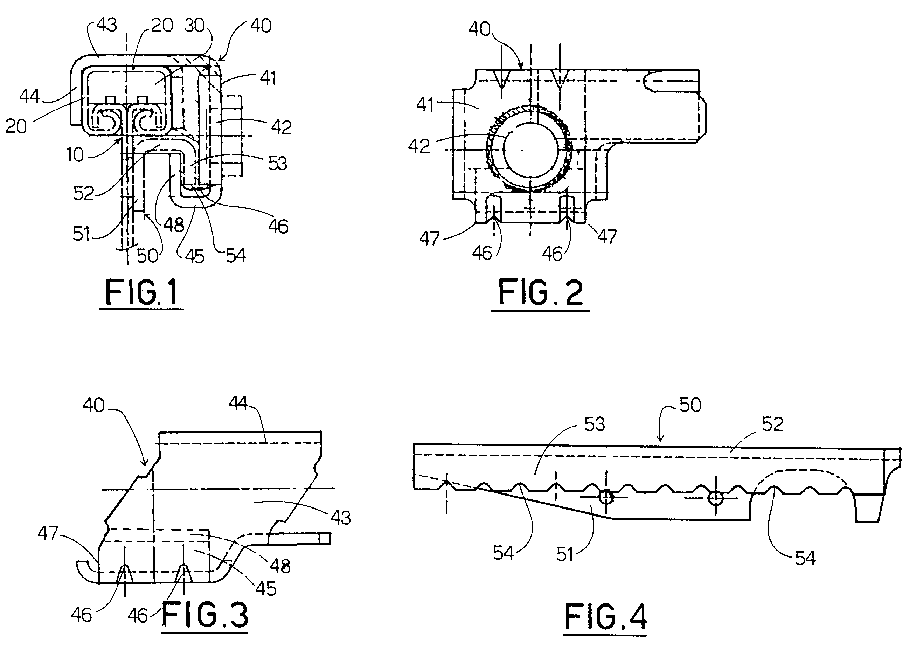

With reference to Figure 1, numeral 10 indicates a fixed guide for supporting a passenger's vehicle seat. This guide, of a conventional type made of steel, is usually welded underneath to the floor of the vehicle. A mobile guide 20 is slidably mounted on top of the fixed guide 10. The mobile guide is anchored to the bottom part of the structure of the seat (not shown for simplicity) and is able to slide with respect to the fixed guide 10. The movement is facilitated by rollers or sliding blocks 30 interposed between the guides.

According to the invention, a plate 40 preferably made of steel, is welded to the mobile guide 20. Said plate, which is suitably shaped, bent and perforated, is restrained to a bracket (not shown for simplicity) carrying the fastening and unfastening device for the safety belt buckle. The function of the plate 40 is to get stuck, in case of collision of the vehicle, with a rack profile 50 which is in turn welded to the fixed guide 10, as described hereinbelow.

With reference to Figures 1 to 3, the plate 40 comprises a main vertical wall 41 in which a circular bore 42 is obtained for allowing the connection, through a screw bolt, to the lower end of a conventional bracket provided, at its upper end, with a safety belt fastening device.

The upper part of plate 40 is folded so as to form a horizontal portion 43 from which a vertical border 44 extends parallel to the main wall 41, copying the outline of the external surface of the mobile guide 20, to which both portions 43 and 44 are either welded or otherwise securely fixed. The lower part of plate 40 is folded to a U-shape forming a horizontal portion 45 in which inner indents are obtained so as to determine transverse projections 46 substantially parallel to the inferior edges 47 of said portion. The plate is then folded upwardly forming a further vertical tongue 48. This tongue is slipped underneath the rack profile 50 (Figs. 1 and 4), which is folded to an inverted U-shape.

Profile 50 comprises a vertical wall 51 welded along its entire length to the fixed guide 10, and is folded forming an upper horizontal portion 51 and a vertical rack border 53 that lies in a plane that is substantially parallel to the one of the tongue 48 of plate 40.

Again with reference to Figure 1, under normal conditions, when no force capable of yielding significantly plate 40 occurs, there is a considerable vertical slack between the projections 46 of plate 40 and the lower edge 54 of the rack profile 50. The assembly formed by the mobile guide 20 and the plate 40 can slide horizontally along the fixed guide 10 and the profile 50 without interfering with the latter.

In exceptional conditions, for example in case of a crash or an extremely sharp deceleration, the safety belt transmits a high upwardly directed tractive stress to the plate 40, through the bracket restrained thereto. As a consequence of this stress, the plate 40 bends upwardly with respect to the zone where it is welded to the mobile guide 20.

The overall deformation will be rather small because in its upward movement the plate 40 brings its projections 46 or edges 47 (according to the eccentricity of the tractive stress on the plate) to engage the teeth of the rack profile 50. The previous slack is therefore eliminated and any further upward movement of plate 40 (and of the bracket holding the safety belt buckle) is stopped, as well as horizontal sliding of the mobile guide with respect to the fixed guide.

As it can be appeciated, the system of the present invention allows the safety belt to remain securely constrained to the seat guides, and therefore to the vehicle floor, in case of an accident, without significant yielding of anchoring points, favouring the safety of the passenger.

A further advantage, due to reciprocal locking of mobile and fixed guides by means of the above described plate and rack profile, is that the present system is useful in preventing the seat from sliding forward in case conventional manual means for locking and unlocking the mobile guides from the fixed guides should break.

The invention is not limited to the aforegoing description, which is to be considered purely as an illustration of the best method of implementing the system, and modifications in the terms of the shape, dimensions and arrangements of the parts and of the constructional and operational details. The invention includes all modifications which fall within its scope, as defined by the following claims.

## Claims

1. A system for constraining passenger safety belts to the vehicle seat supporting guides of the type comprising a pair of fixed guides (10), rigid with the vehicle floor, and a pair of mobile guides (20) rigid with the seat and slidable along the fixed guides, characterised in that it comprises constraining means (40), securely attachable to the safety belt and fixed to at least one of said mobile guides (20); said means (40) being provided with first locking means (46,47) facing corresponding second locking means (50) fitted with locking seats (54) and rigid with at least one of said fixed guides (10); the system being capable of assuming two opposite arrangements: the first arrangement, for normal operating conditions, in which said first locking means are spaced apart from said locking seats (54); the second arrangement, in case of collisions, in which the constraining means (40) have said first locking means (46,47) engaged within said locking seats (54) of said second locking means (50).

2. A system according to claim 1 wherein said constraining means (40) consists of a plate suitably shaped, perforated and bent so as to provide:
- a vertical wall (41) with a seat (42) for allowing connection to a bracket carrying a safety belt fastening device;
- a substantially horizontal portion (43) secured to a mobile guide (20);
- a substantially horizontal portion (45) provided with said first locking means (46,47).

3. A system according to claims 1 and 2, wherein said first locking means (46,47) consist of transverse projections (46) obtained by indenting said portion (45) of said plate (40) and the edges (47) of said portion (45).

4. A system according to claim 1 wherein said locking seats (54) are teeth obtained in said locking means (50) consisting of a profile welded along a fixed guide (10).

5. A system according to claims 1 and 4, wherein said profile (50) has a cross section with an inverse U-shape; said locking seats (54) being located on one edge of said profile (50).

6. A system according to the preceding claims, wherein said projections (46) are obtained in the bottom of a U-shaped portion having a tongue (48) slipped underneath said inverted U profile (50).
